# EUROPÄISCHE PATENTSCHRIFT

(11) **EP 0 392 352 B1**
(45) Veröffentlichungstag und Bekanntmachung des Hinweises auf die Patenterteilung: **21.09.1994**
(21) Anmeldenummer: 90106517.7
(22) Anmeldetag: 05.04.1990
(51) Int. Cl.: C08G 18/65, C08G 18/67, C09D 175/14, C08J 3/28, C08G 18/08, C08G 18/12, C08G 18/32, C08G 18/28, C14C 11/00

(54) **Wässrige Dispersionen von durch Einwirkung von energiereicher Strahlung vernetzbaren Polyurethanen**
Aqueous dispersions of high energy radiation curable polyurethanes
Dispersions aqueuses de polyuréthanes réticulables par radiation à haute énergie

(30) Priorität: 11.04.1989 DE 3911827
(43) Veröffentlichungstag der Anmeldung: 17.10.1990
(73) Patentinhaber: BASF Aktiengesellschaft, 67063 Ludwigshafen (DE)
(72) Erfinder: Haeberle, Karl, Dr., D-6730 Neustadt (DE); Weyland, Peter, Dr., D-6710 Frankenthal (DE); Eckert, Guenter, Dr., D-6703 Limburgerhof (DE); Renz, Hans, Dr., D-6701 Meckenheim (DE)

(56) Entgegenhaltungen:
- EP-A- 0 033 898
- EP-A- 0 098 752
- EP-A- 0 146 897
- EP-A- 0 209 684
- DE-A- 3 437 918
- US-A- 4 153 778

## Beschreibung

Die vorliegende Erfindung betrifft wäßrige Dispersionen von durch Einwirkung von energiereicher Strahlung vernetzbaren Polyurethanen aus
a) 1 Grammäquivalent NCO eines Polyisocyanates,
b) 0,1 - 0,8 Grammäquivalenten OH eines Polyols mit einem Molekulargewicht Zwischen 400 und 6000 g/mol,
c) 0 - 0,8 Grammäquivalenten OH eines Polyols mit einem Molekulargewicht zwischen 62 und 399 g/mol,
d) 0 - 0,4 Grammäquivalenten NH eines Polyamins ohne tertiäre Aminogruppen mit mindestens zwei gegenüber Isocyanat reaktiven Aminogruppen, ausgenommen solche der Komponente f),
e) 0 - 0,4 Grammäquivalent OH eines Aminoalkohols, ausgewählt aus Ethanolamin, Isopropanolamin, Methylethanolamin und Aminoethoxyethanol,
f) 0,05 - 0,5 Grammäquivalent OH oder NH einer Verbindung mit Ionengruppen oder in Ionengruppen überführbaren Gruppen mit zusätzlich mindestens zwei gegenüber Isocyanat reaktiven Gruppen, ausgewählt aus Hydroxyl- und Aminogruppen,
g) 0 - 0,2 Grammäquivalent OH eines monofunktionellen Polyetherols sowie
h) einer Verbindung mit mindestens einer ethylenisch ungesättigten Gruppe und mindestens einer Hydroxylgruppe,
mit den Maßgaben, daß (i) die Summe der OH- und NH-Grammäquivalente zwischen 0,9 und 1,2 liegt, und (ii) die Komponenten unter a) bis h) in Form von Einzelindividuen oder Gemischen aus zwei oder mehr Einzelindividuen vorliegen können.

Wäßrige Dispersionen dieser Art sind beispielsweise in den US-PSen 4 339 566 und 4 722 966 beschrieben und werden für die Beschichtung flexibler Substrate wie Leder vorgeschlagen. Es tritt, insbesondere bei der Applikation auf Leder, jedoch eine Versprödung der Beschichtung ein, so daß zwar gute Beständigkeit gegen Abrieb, aber mangelhafte Knickbeständigkeit erhalten wird.

In der DE-OS 34 37 918 werden strahlenvernetzbare Dispersionen aus Oligourethanen beschrieben, die zur Erzeugung hochglänzender Beschichtungen auf Leder, welche die Narbenstruktur völlig verdecken, geeignet sind. Dies ist von gewissem Nachteil, da vom Anwender häufig gerade der Erhalt der natürlichen Struktur des Leders gewünscht wird.

Aufgabe der vorliegenden Erfindung ist es, wäßrige Dispersionen von Polyurethanen herzustellen, die für Beschichtungen geeignet sind, die auf flexiblen Substraten, insbesondere Leder, aufgebracht, den hohen Anforderungen der Praxis bezüglich der Knick- und Abriebfestigkeit, auch im nassen Zustand, entsprechen. Dabei soll eine gegebenenfalls vorhandene natürliche Oberflächenstruktur des Substrats weitestmöglich erhalten bleiben.

Es wurde gefunden, daß diese Aufgabe gelöst werden kann mit Dispersionen der eingangs zitierten Art, die dadurch gekennzeichnet sind, daß die Verbindungen mit ethylenisch ungesättigten Gruppen h) in relativ sehr geringen Mengen, nämlich in Mengen von 0,02 bis 0,08, vorzugsweise 0,04 bis 0,07, Grammäquivalent OH eingesetzt sind und daß der K-Wert nach Fikentscher des in Dimethylformamid gelösten Polyurethans größer als 40, vorzugsweise größer als 50 ist, oder daß das Polyurethan in Dimethylformamid nicht löslich ist.

Gegenstand der Erfindung sind demnach wäßrige Dispersionen von durch Einwirkung von energiereicher Strahlung vernetzbaren Polyurethanen aus
a) 1 Grammäquivalent NCO eines Polyisocyanates,
b) 0,1 - 0,8, vorzugsweise 0,1 - 0,5 Grammäquivalenten OH eines Polyols mit einem Molekulargewicht zwischen 400 und 6000, vorzugsweise von 800 bis 4000 g/mol,
c) 0 - 0,8, vorzugsweise 0,2 - 0,8 Grammäquivalenten OH eines Polyols mit einem Molekulargewicht zwischen 62 und 399 g/mol,
d) 0 - 0,4 Grammäquivalenten NH eines Polyamins ohne tertiäre Aminogruppen mit mindestens zwei gegenüber Isocyanat reaktiven Aminogruppen, ausgenommen solche der Komponente f),
e) 0 - 0,4 Grammäquivalenten OH eines Aminoalkohols, ausgewählt aus Ethanolamin, Isopropanolamin, Methylethanolamin und Aminoethoxyethanol,
f) 0,05 - 0,5 Grammäquivalenten OH oder NH einer Verbindung mit Ionengruppen oder in Ionengruppen überführbaren Gruppen mit zusätzlich mindestens zwei gegenüber Isocyanat reaktiven Gruppen, ausgewählt aus Hydroxyl- und Aminogruppen,
g) 0 - 0,2, vorzugsweise 0 - 0,1 Grammäquivalent OH eines monofunktionellen Polyetherols sowie
h) einer Verbindung mit mindestens einer ethylenisch Ungesättigten Gruppe und mindestens einer Hydroxylgruppe,
mit den Maßgaben, daß (i) die Summe der OH- und NH-Grammäquivalente zwischen 0,9 und 1,2, vorzugsweise 0,95 - 1,1 liegt und (ii) die Komponenten unter a) bis h) in Form von Einzelindividuen oder Gemischen aus zwei oder mehr Einzelindividuen vorliegen können. Die erfindungsgemäßen Dispersionen sind dadurch gekennzeichnet, daß die Verbindungen mit mindestens einer ethylenisch ungesättigten Gruppe h) in Mengen von 0,02 bis 0,08, vorzugsweise 0,04 bis 0,07 Grammäquivalent OH eingesetzt sind und daß das Polyurethan, gelöst in Dimethylformamid, einen K-Wert nach Fikentscher größer als 40, vorzugsweise größer 50 aufweist oder in Dimethylformamid nicht löslich ist.

Zum Erfindungsgegenstand ist im einzelnen das Folgende zu bemerken:
Geeignete Polyisocyanate a) sind organische Verbindungen, die mindestens zwei freie Isocyanatgruppen aufweisen. Vorzugsweise werden Diisocyanate X(NCO)₂ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenwasserstoffatomen, einen aromatischen Kohlenwasserstoffrest mit 6 bis 15 Kohlenwasserstoffatomen oder einen araliphatischen Kohlenwasserstoffrest mit 7 bis 15 Kohlenstoffatomen bedeutet. Beispiele derartiger Diisocyanate sind Tetramethylendiisocyanat, Hexamethylendiisocyanat, Dodecamethylendiisocyanat, 1,4-Diisocyanato-cyclohexan, 1-Isocyanato-3,5,5-trimethyl-5-isocyanatomethylcyclohexan, 4,4'-Diisocyanatodicyclohexyl-methan, 4,4'-Diisocyanato-dicyclohexylpropan-(2,2), 1,4-Diisocyanatobenzol, 2,4-Diisocyanato-toluol, 2,6-Diisocyanatotoluol, 4,4'-Diisocyanato-diphenylmethan, p-Xylylendiisocyanat, sowie aus diesen Verbindungen bestehende Gemische, wie besonders Gemische aus aliphatischen bzw. cycloaliphatischen und aromatischen Diisocyanaten im Molverhältnis 1 : 4 bis 5 : 1. Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Bei den Polyolen b) des Molekulargewichtsbereiches zwischen 400 und 6000 g/mol handelt es sich um Polyesterpolyole oder Polyetherpolyole.

Als Polyesterpolyole sind solche mit Molekulargewichten zwischen 400 und 6000 g/mol, vorzugsweise von 800 bis 4000 g/mol, und insbesondere von 1400 bis 3000 g/mol, und speziell solche Dicarbonsäurepolyesterpolyole, besonders -diole geeignet; ebenso Polyesterole auf Lacton-Basis. Bei den Polyesterpolyolen, vor allem bei den -diolen, handelt es sich um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Als mehrwertige Alkohole kommen z.B. Ethylenglykol, Propylenglykol-(1,2) und -(1,3), Butandiol-(1,4), -(1,3) und -(2,3), Butendiol-(1,4), Butindiol-(1,4), Pentandiol-(1,5), Hexandiol-(1,6), Octandiol-(1,8), Neopentylglykol, Cyclohexandimethanol (1,4-Bis-hydroxymethylcyclohexan), 2-Methyl-1,3-propandiol, Pentandiol-(1,5), Glycerin, Trimethylolpropan, Hexantriol-(1,2,6), Butantriol-(1,2,4), Trimethylolethan, ferner Diethylenglykol, Triethylenglykol, Tetraethylenglykol, Polyethylenglykol, Dipropylenglykol, Polypropylenglykol, Dibutylenglykol und Polybutylenglykole in Frage.

Bei den geeigneten Polyesterolen auf Lacton-Basis handelt es sich um Homo- oder Mischpolymerisate von Lactonen, bevorzugt um difunktionelle, endständige Hydroxylgruppen aufweisende Anlagerungsprodukte von Lactonen bzw. Lactongemischen, wie z.B. ε-Caprolacton, β-Propiolacton, ν-Butyrolacton und/oder Methyl-ε-caprolacton an geeignete difunktionelle Startermoleküle, z.B. die vorstehend als Aufbaukomponente für die Polyesterpolyole genannten niedermolekularen, zweiwertigen Alkohole. Die entsprechenden Polymerisate des ε-Caprolactons sind besonders bevorzugt.

Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Die - gegebenenfalls im Gemisch mit Polyesterpolyolen - einsetzbaren Polyetherpolyole, insbesondere -diole, sind die in der Polyurethan-Chemie an sich bekannten Produkte, die beispielsweise durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4'-Dihydroxy-diphenylpropan, Anilin hergestellt sein können.

Weitere geeignete Stoffe dieser Art sind Polyether-1,3-Diole, z.B. das formal an einer Gruppe alkoxylierte Trimethylolpropan C₂H₅-C(CH₂OH)₂-CH₂OXR, wobei X für eine Polyalkylenoxidkette der vorstehend bei einwertigen Polyetheralkoholen angegebenen Art steht, die mit einem Alkylrest R, z.B. CH₃ abgeschlossen ist.

Als Polyole c) mit einem Molekulargewicht zwischen 62 und 399 g/mol, eignen sich z.B. die entsprechenden unter b) aufgeführten, zur Herstellung der Polyesterole geeigneten Diole und Triole, sowie höher als trifunktionelle Alkohole wie Pentaerythrit oder Sorbit. Höher als difunktionelle Polyole c) werden in solchem Umfang eingesetzt, daß die kettenabbrechende Wirkung evtl. ebenfalls eingesetzter monofunktioneller Verbindungen kompensiert wird. Es darf jedoch nicht zuviel an höher als difunktionellen Polyolen c) verwendet werden, da sonst das Prepolymer vernetzt und nicht mehr dispergiert werden kann.

Bei den gegebenenfalls einzusetzenden Komponenten d) handelt es sich um mindestens difunktionelle Amin-Kettenverlängerer bzw. Vernetzer mit einem bevorzugten Molgewichtsbereich Von 32 bis 500 g/mol, insbesondere von 60 bis 300 g/mol, ohne tertiäre Aminogruppen. Beispiele hierfür sind Diamine, wie Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA), 4,4'-Diaminodicyclohexylmethan, 1,4-Diamino-cyclohexan, 1,2-Diamino-propan, Hydrazin, Hydrazinhydrat oder Triamine, wie Diethylentriamin. Sie können in Anteilen von 0 bis 2,0 Mol/Mol Komponente b) eingesetzt sein, insbesondere zur Kettenverlängerung von isocyanatgruppenhaltigen Prepolymeren vor oder insbesondere im Falle von Triaminen nach der Dispergierung in Wasser. Die aminogruppenhaltigen Kettenverlängerer können auch in blockierter Form, z.B. in Form der entsprechenden Ketimine (vgl. z.B. die CA-PS 1 129 128), Ketazine (vgl. etwa die US-PSen 4 269 748 und 4 269 748) oder Aminsalze (s. US-PS 4 292 226) eingesetzt sein. Auch Oxazolidine, wie sie beispielsweise gemäß den US-PSen 4 192 937 und 4 192 937 vewendet werden, stellen verkappte Diamine dar, die für die Herstellung der erfindungsgemäßen Polyurethan-Dispersionen zur Kettenverlängerung der Isocyanat-Prepolymeren eingesetzt werden können. Bei der Verwendung derartiger verkappter Diamine werden diese im allgemeinen mit den Isocyanat-Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Diamine freigesetzt werden.

Bei den gegebenenfalls einzusetzenden Komponenten e) handelt es sich um Ethanolamin, Isopropanolamin, Methylethanolamin oder Aminoethoxyethanol.

Als Aufbaukomponenten f) werden Verbindungen eingesetzt, die mindestens zwei gegenüber Isocyanatgruppen reaktionsfähige Gruppen und außerdem ionische Gruppen oder durch eine einfache Neutralisations- oder Quaternierungsreaktion in ionische Gruppen überführbare potentiell ionische Gruppe aufweisen. Die Einführung der kationischen und anionischen Gruppen erfolgt durch Mitverwendung von (potentielle) kationische Gruppen aufweisenden Verbindungen mit gegenüber Isocyanatgruppen reaktionsfähigen Wasserstoffatomen oder (potentielle) anionische Gruppen aufweisenden Verbindungen mit gegenüber Isocyanatgruppen reaktionsfähigen Wasserstoffatomen. Zu dieser Gruppe von Verbindungen gehören beispielsweise tertiäre Stickstoffatome aufweisende Polyether mit vorzugsweise zwei endständigen Hydroxylgruppen, wie sie beispielsweise durch Alkoxylierung von zwei an Aminstickstoff gebundene Wasserstoffatome aufweisenden Aminen, z.B. N-Methylamin, Anilin oder N,N'-Dimethylhydrazin, in an sich üblicher Weise zugänglich sind. Derartige Polyether weisen im allgemeinen ein zwischen 500 und 6000 g/mol liegendes Molekulargewicht auf. Vorzugsweise werden jedoch die ionischen Gruppen durch Mitverwendung von vergleichsweise niedermolekularen Verbindungen mit (potentiellen) ionischen Gruppen und gegenüber Isocyanatgruppen reaktionsfähigen Gruppen eingeführt. Beispielsweise hierfür sind in den US-PSen 3 479 310 und 4 056 564 sowie der GB-PS 1 455 554 aufgeführt. Auch Dihydroxyphosphonate, wie das Natriumsalz des 2,3-Dihydroxypropan-phosphonsäure-ethylesters oder das entsprechende Natriumsalz der nichtveresterten Phosphonsäure, können als ionische Aufbaukomponente mitverwendet werden.

Besonders bevorzugte (potentielle) ionische Aufbaukomponenten f) sind N-Alkyldialkanolamine, z.B. N-Methyldiethanolamin, N-Ethyldiethanolamin, Diaminosulfonate, wie das Na-Salz der N-(2-Aminoethyl)-2-aminoethansulfonsäure, Dihydroxysulfonate, Dihydroxycarbonsäuren, wie Dimethylolpropionsäure, Diaminocarbonsäuren bzw. -carboxylate, wie Lysin oder das Na-Salz der N-(2-Aminoethyl)-2-aminoethancarbonsäure und Diamine mit mindestens einem zusätzlichen tertiären Aminstickstoffatom, z.B. N-Methyl-bis-(3-aminopropyl)-amin.

Die überführung der gegebenenfalls zunächst in das Polyadditionsprodukt eingebauten potentiellen ionischen Gruppen zumindest teilweise in ionische Gruppen geschieht in an sich üblicher Weise durch Neutralisation der potentiellen anionischen und kationischen Gruppen oder durch Quarternierung von tertiären aminischen Stickstoffatomen.

Zur Neutralisation von potentiellen anionischen Gruppen, z.B. Carboxylgruppen, werden anorganische und/oder organische Basen eingesetzt wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol.

Zur überführung der potentiellen kationischen Gruppen, z.B. der tertiären Amingruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder
als Quarternierungsmittel, z.B. Methylchlorid, Methyljodid, Dimethylsulfat, Benzylchlorid, Chloressigsäureethylester oder Bromacetamid geeignet. Weitere geeignete Neutralisations- und Quarternierungsmittel sind z.B. in der US-PS 3 479 310, Spalte 6, beschrieben.

Diese Neutralisation oder Quarternisierung der potentiellen Ionengruppen kann vor, während, jedoch vorzugsweise nach der Isocyanat-Polyadditionsreaktion erfolgen.

Die Mengen der Aufbaukomponente f), bei potentiellen ionengruppenhaltigen Komponenten unter Berücksichtigung des Neutralisations- oder Quarternierungsgrades, ist vorzugsweise so zu wählen, daß die Polyurethane einen Gehalt von 0,05 bis 2 m Äqu/g Polyurethan, vorzugsweise von 0,07 bis 1,0 und besonders bevorzugt von 0,1 bis 0,7 m Äqu/g Polyurethan an ionischen Gruppen aufweisen.

Bei den gegebenenfalls mitzuverwendenden Komponenten g) handelt es sich vorzugsweise um einwertige Polyetheralkohole des Molgewichtsbereiches 500 bis 10 000 g/mol, vorzugsweise von 1 000 bis 5 000 g/mol. Einwertige Polyetheralkohole sind durch Alkoxylierung von einwertigen Startermolekülen, wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, besonders bevorzugt mindestens 65 Mol-% Ethylenoxid.

Durch die Komponente g) können in den Polyurethanen somit gegebenenfalls in end- und/oder seitenständig angeordneten Polyetherketten vorliegende Ethylenoxidsegmente eingebaut sein, die im Polyurethan neben den ionischen Gruppen den hydrophilen Charakter beeinflussen.

Die Verbindungen der genannten Art mit innerhalb von end- und/oder seitenständig angeordneten Polyetherketten vorliegenden Ethylenoxideinheiten werden, so man von ihnen Gebrauch macht, in solchen Mengen eingesetzt, daß in den Polyurethan-Disperisonen von 0 bis 10, vorzugsweise 0 bis 5 Gew.%, innerhalb von end- und/oder seitenständig angeordneten Polyetherketten eingebauten Ethylenoxideinheiten in den Polyurethanen vorliegen. Die Gesamtmenge der hydrophilen Struktureinheiten (ionische Gruppen und Ethylenoxideinheiten der zuletzt genannten Art) muß jedoch stets so gewählt werden, daß die Dispergierbarkeit der Polyurethane in Wasser gewährleistet ist.

Weitere Beispiele von bei der Herstellung der erfindungsgemäßen Dispersionen als Komponenten a) bis e) einsetzbaren Verbindungen sind z.B. in High Polymers, Vol. XVI, "Polyurethanes, Chemistry and Technology", von Saunders-Frisch, Interscience Publishers, New York, London, Band I, 1962, Seiten 32 bis 42 und Seiten 44 bis 54 und Band II, 1964, Seiten 5 bis 6 und 198 bis 199, beschrieben.

Als Verbindungen mit ethylenisch ungesättigten Gruppen h) kommen z.B. Ester von Acryl- oder Methacrylsäure mit Polyolen in Frage, wobei mindestens eine OH-Gruppe des Polyols unverestert bleibt. Besonders geeignet sind Hydroxyalkyl(meth)acrylate HO(CH₂)ₙOOC(R¹) C = CH₂ (n = 2 bis 6; R¹ = H, CH₃) und ihre Stellungsisomeren, Mono(Meth)acrylsäureester von Polyetherdiolen HO(CHR²CHR³O)ₘOC(R¹) C = CH₂ (R¹ = H, CH₃; R², R³ = H, CH₃, C₂H₅; m = 2 bis 20), Trimethylolpropanmono- und di (meth)acrylat, Pentaerythritdi- und tri(meth)acrylat oder die in der US-PS 4 357 221 genannten Reaktionsprodukte von Epoxidverbindungen mit (Meth)acrylsäure. Auch Verbindungen wie 4-Ethenylphenol, 4-Isopropenylphenol oder 4-Ethenylbenzylalkohol sowie deren Stellungsisomere oder die davon abgeleiteten Alkoxylierungsprodukte sind verwendbar.

Die Isocyanatgruppen und die mit Isocyanat reaktionsfähigen Hydroxyl- und Aminogruppen sollen in ungefähr äquivalent molaren Verhältnissen eingesetzt sein. Das Verhältnis der Zahl der Isocyanatgruppen zur Zahl der insgesamt mit Isocyanat reaktionsfähigen Wasserstoffatome soll im Bereich von 0,9 bis 1,2, bevorzugt von 0,95 bis 1,1, insbesondere von 0,98 bis 1,03 liegen.

Zur Beschleunigung der Reaktion der Diisocyanate können die üblichen und bekannten Katalysatoren, wie Dibutylzinndilaurat, Zinn-II-octoat oder 1,4-Diazabicyclo-(2,2,2)-octan, mitverwendet sein.

Um eine unerwünschte, vorzeitige Polymerisation der ungesättigten Gruppen zu vermeiden, werden, vorteilhaft bereits bei der Herstellung des Polyurethans, Polymerisationsinhibitoren zugesetzt. Hierfür sind beispielsweise Chinone, Phenole oder Phenolderivate, wie p-Benzochinon, Hydrochinon, p-Methoxyphenol u.a. Verbindungen geeignet, wie sie z.B. beschrieben sind in "Encyclopedia of Polymer Science and Technology", Vol. 7, 1967, p. 644-664 Editors: Mark, Gaylord und Bikales, Interscience Publishers, Wiley + Sons, New York-London-Sydney.

Die Herstellung der erfindungsgemäßen wäßrigen Polyurethan-Dispersionen erfolgt nach an sich üblichen Verfahren, prinzipiell werden die Komponenten a) bis h) in an sich bekannter Weise polyaddiert und anschließend mit Wasser dispergiert. So kann z.B. zunächst aus den Komponenten a), b), h), und gegebenenfalls c), e) oder g) in der Schmelze oder in Gegenwart eines inerten mit Wasser mischbaren Lösungsmittels, wie Aceton, Tetrahydrofuran, Methylethylketon oder N-Methylpyrrolidon ein Prepolymeres mit endständigen Isocyanatgruppen hergestellt werden. Die Reaktionstemperatur liegt im allgemeinen bei 20 bis 160°C, vorzugsweise bei 50 bis 100°C.

Wird als Polyisocyanat a) ein Gemisch aus (cyclo)-aliphatischem Diisocyanat und aromatischem Diisocyanat eingesetzt, werden die Diisocyanate entweder im Gemisch miteinander oder auch nacheinander mit den Hydroxylverbindungen b), h) und ggf. c), e) oder g) umgesetzt.

Die so erhaltenen Isocyanat-Prepolymeren werden gegebenenfalls nach (weiterer) Verdünnung mit Lösungsmitteln der oben genannten Art, bevorzugt niedrigsiedenden Lösungsmitteln mit Siedepunkten unter 100°C, bei einer Temperatur zwischen 20 und 80°C durch Umsetzen mit aminofunktionellen Produkten der Komponente f) und gegebenenfalls d) kettenverlängert und in die hochmolekularen Polyurethane übergeführt. Die Lösung des durch Einbau der Komponenten f) ionengruppentragenden gegebenenfalls nach Neutralisation oder Quarternisierung ionengruppentragenden Polyurethans wird durch Einrühren von Wasser dispergiert, anschließend wird das Lösungsmittel abdestilliert.

Werden als (potentiell) ionengruppentragende Komponente f) hydroxylfunktionelle Produkte eingesetzt, werden die Komponenten a), b), f), h) und gegebenenfalls c), e) und g) zu einem Polyurethan oder zu einem Isocyanat-Prepolymeren umgesetzt. Im ersten Fall wird das ionengruppentragende, gegebenenfalls nach Neutralisation oder Quarternisierung ionengruppentragende Polyurethan bzw. dessen Lösung in Wasser dispergiert. Bevorzugt ist jedoch der Weg über ein Isocyanat-Prepolymeres, das, wie oben angegeben, mit aminischen Kettenverlängerern f) und/oder gegebenenfalls d) zum hochmolekularen Polyurethan umgesetzt und in Wasser dispergiert wird.

Die überführung potentieller Salzgruppen, z.B. Carboxylgruppen oder tertiärer Aminogruppen in die entsprechenden Ionen erfolgt durch Neutralisation mit Basen oder Säuren oder durch Quarternisierung der tertiären Aminogruppen vor der Durchmischung mit dem für das Dispergieren eingesetzten Wasser. Weiterhin ist es beispielsweise möglich, die zur Neutralisation der Carboxylgruppen benötigte Base bzw. der tertiären Aminogruppen erforderliche Säure dem zum Dispergieren verwendeten Wasser zuzumischen. Es ist auch möglich, in den Isocyanat-Prepolymeren vorliegende potentielle Salzgruppen, z.B. Carboxylgruppen oder tertiäre Aminogruppen, vor der Umsetzung mit aminischen Kettenverlängerern durch Neutralisation oder Quarternisierung mindestens teilweise in Salzgruppen zu überführen.

Weiterhin ist es möglich, ionengruppentragende oder potentiell ionengruppentragende Isocyanat-Prepolymere in Wasser zu dispergieren, im Fall von potentiell ionengruppentragenden Prepolymeren nach Neutralisation oder Quarternisierung oder unter Zusatz der Neutralisationsmittel Basen oder Säuren zum Dispergierwasser, und anschließend mit den aminischen Kettenverlängerern bzw. Vernetzern d) in disperser Phase zum fertigen Polyurethan umzusetzen.

Die Menge des Dispergierwassers wird allgemein so bemessen, daß wäßrige Polyurethan-Dispersionen mit 10 bis 60 %, vorzugsweise mit 20 bis 50 % Feststoffgehalt erhalten werden.

Es ist auch möglich, die Polyurethan-Dispersionen nach dem sogenannten Schmelzdispergierverfahren entsprechend den Angaben in der US-PS 3 756 992 herzustellen, wobei durch geeignete Auswahl der Art und Mengenverhältnisse der eingesetzten Ausgangsmaterialien lediglich darauf zu achten ist, daß die resultierenden Polyurethane den erfindungsgemäßen Bedingungen entsprechen.

Wesentlich ist, daß bei Verwendung monofunktioneller Einsatzstoffe so viel an tri- oder höherfunktionellen Verbindungen a), b), c), d) oder e) zugegeben wird, daß die kettenabbrechende Wirkung der monofunktionellen Einsatzstoffe kompensiert wird. Der Anteil an höherfunktionellen Verbindungen a), b), c) oder e) kann jedoch nicht so hoch gewählt werden, daß das Prepolymer vernetzt und nicht mehr dispergierbar ist. I.a. werden auf x mol monofunktioneller Einsatzstoff höchstens x/q mol höher als difunktioneller Verbindungen a), b), c) oder e) zugesetzt, wobei q die (mittlere) Funktionalität dieser Verbindungen ist.

Wird dagegen, wie oben beschrieben, ein Isocyanat-Prepolymeres in disperser Phase mit den Polyaminen f) umgesetzt, so können mehr als x/q mol an höher als difunktionellen Polyaminen verwendet werden, da in diesem Fall eine Vernetzung des Polyurethans nicht nur nicht stört, sondern häufig sogar erwünscht ist.

Der nach Fikentscher, Cellulosechemie 13, 58 (1932) bestimmte K-Wert des in Dimethylformamid gelösten Polyurethans soll größer als 40, besonders bevorzugt größer als 50 sein. Besonders bevorzugt sind auch in Dimethylformamid unlösliche Polyurethane.

Die Polymerisation (Vernetzung) der Polyurethane kann mit energiereicher Strahlung wie UV-Licht oder Elektronenstrahlung erfolgen.

Werden die erfindungsgemäßen Polyurethane durch UV-Licht zur Härtung gebracht, so ist der Zusatz von Photoinitiatoren erforderlich. Diese können im Polyurethan gelöst und mit diesem in der wäßrigen Phase dispergiert werden oder nachträglich in die Dispersion eingerührt werden, gegebenenfalls gelöst in einem mit Wasser mischbaren Lösungsmittel.

Als Photoinitiatoren sind die üblicherweise eingesetzten Verbindungen geeignet, beispielsweise Benzophenon sowie ganz allgemein aromatische Ketoverbindungen, die sich vom Benzophenon ableiten, wie Alkylbenzophenone, halogenmethylierte Benzophenone, gemäß der US-PS 3 686 084, Michlers Keton, Anthron, halogenierte Benzophenone. Ferner eignen sich Benzoin und seine Derivate, etwa gemäß den US-PSen 3 720 635, 3 657 088, 3 607 693, 3 636 026, 3 664 937, 3 824 284, 3 891 524, 3 914 166, 3 915 823, 3 732 273 und 3 639 321. Ebenfalls wirksame Photoinitiatoren stellen Anthrachinon und zahlreiche seiner Derivate dar, beispielsweise β-Methylanthrachinon, tert.-Butylanthrachinon und Anthrachinoncarbonsäureester, ebenso Oximester gemäß der US-PS 3 558 309.

Die erwähnten Photoinitiatoren, die je nach Verwendungszweck der erfindungsgemäßen Massen in Mengen zwischen 0,1 und 20 Gew.%, vorzugsweise, 0,1 bis 5 Gew.%, bezogen auf polymerisierbare Komponente, eingesetzt werden, können als einzelne Substanz oder, wegen häufiger vorteilhafter Synergistischer Effekte, auch in Kombination miteinander verwendet werden.

Vorteilhafte Zusätze, die zu einer weiteren Steigerung der Reaktivität führen können, sind bestimmte tert. Amine wie z.B. Triethylamin und Triethanolamin. Auch sie können in Mengen bis zu 5 Gew.%, bezogen auf die polymerisierbaren Komponenten, eingesetzt werden.

Die erfindungsgemäßen Dispersionen können z.B. durch Spritzen, Gießen der Rakeln auf Substrate wie Metall, Kunststoff, Glas, Holz, Papier, Pappe, Leder oder Textil aufgebracht werden. Als Substrate eignen sich vorzugsweise flexible Substrate.
Nach der physikalischen Trocknung wird die Beschichtung durch Bestrahlung mit einem der herkömmlichen UV- oder Elektronenstrahlgeräten vernetzt.

Die durch die in der Lederindustrie üblichen Methoden auf Leder aufgebrachten erfindungsgemäßen Dispersionen weisen nach der Strahlenvernetzung neben hervorragenden Knick- und Reibechtheiten - auch im nassen Zustand - einen guten lederartigen Griff bei Erhalt der natürlichen Struktur des Leders auf.

Besonders gute Eigenschaften werden erhalten, wenn das Leder zuerst mit einer erfindungsgemäßen Dispersion grundiert wird, nach dem Trocknen ein zweiter Auftrag einer gegebenenfalls von der ersten verschiedenen erfindungsgemäßen Dispersion erfolgt und dann erst die Vernetzung erfolgt.

Zu erwähnen ist abschließend noch, daß die erfindungsgemäßen Dispersionen auch thermisch vernetzt werden können. Hierbei ist der Zusatz von Initiatoren, die bei erhöhten Temperaturen Radikale bilden notwendig. Verwendbar sind z.B. Dibenzoylperoxid, Cumolhydroperoxid oder Azodiisobuttersäuredinitril. Weitere Beispiele für geeignete Initiatoren sind in "Polymer Handbook", 2. Ausgabe, Wiley & Sons, New York beschrieben.

Die in den nachfolgenden Darlegungen angegebenen Teile und Prozente sind - soweit nicht anders vermerkt - Gewichtsteile bzw. -prozente.

### Beispiel 1

394 Teile eines Polyesters aus Adipinsäure, Neopentylglykol und Hexandiol (OHZ=56), 21.6 Teile Butandiolmonoacrylat, 10,1 Teile Trimethylolpropan, 90,1 Teile Butandiol-1,4 und 0,1 Teil p-Methoxyphenol werden bei 70°C im Vakuum entwässert und anschließend mit 364 Teilen eines äquimolaren Gemisches aus 1-Isocyanato-3,3,5-trimethyl-5-isocyanatomethylcyclohexan (IPDI) und 4,4'-Diisocyanatocyclohexylmethan (HMDI) bei 70°C bis zu einem NCO-Gehalt von 0,90 % umgesetzt. Nach Verdünnen mit 1 000 Teilen Aceton werden 48 Teile einer 40 %igen Lösung des Na-Salzes der N-(Aminoethyl)-2-aminoethancarbonsäure zugesetzt und mit 1 370 Teilen Wasser dispergiert.

Nach Destillation des Acetons erhält man eine feinteilige Dispersion mit 40 % Feststoffgehalt; der K-Wert nach Fikentscher in Dimethylformamid beträgt 68.

Auf Rindboxleder wird eine Grundierung bestehend aus 592 Teilen Wasser, 100 Teilen Lepton® schwarz, 100 Teilen Corialgrund® IF, 108 Teilen Corialgrund® OK und 100 Teilen Astacin® Finish PUM aufgebracht. Nach dem Trocknen bei 80°C wird bei 80°C mit 50 bar gebügelt.

Hierauf wird eine Appretur aus 300 Teilen Wasser, 150 Teilen der oben beschriebenen erfindungsgemäßen Dispersion und 7,2 Teilen einer Initiatormischung aus 6 Teilen Benzildimethylketal, 12 Teilen Benzophenon, 18 Teilen Methyldiethanolamin und 36 Teilen Aceton gespritzt (15 g/DIN A 4; bei 80°C trocknen). Das Leder wird zweimal mit 10 m/min unter einer Hochdruckquecksilberlampe (120 W/cm) durchbewegt.

Knickelastizität nach IUP 20:
- trockenes Leder: : keine Beschädigung nach 50 000 Vorgängen
- nasses Leder: : keine Beschädigung nach 20 000 Vorgängen
Reibechtheit nass nach IUP 450:
keine Beschädigung nach 300 Vorgängen.

### Vergleichsversuch 1

Nach der in Beispiel 1 beschriebenen Methode wird eine Dispersion hergestellt aus 394 Teilen des Polyesters aus Beispiel 1, 57,6 Teilen Butandiolmonoacrylat, 29,4 Teilen Trimethylolpropan, 72 Teilen Butandiol-1,4, 0,1 Teilen p-Methoxyphenol, 184,5 Teilen IPDI, 219 Teilen HMDI, 1 000 Teile Aceton, 56,9 Teilen einer 40 %igen Lösung des Na-Salzes der N-(2-Aminoethyl)-2-aminoethancarbonsäure und 1 300 Teilen Wasser.

Nach Destillation des Acetons erhält man eine feinteilige Dispersion mit 40 % Feststoffgehalt; der K-Wert nach Fikentscher in Dimethylformamid beträgt 47.

Auf Rindboxleder, das wie in Beispiel 1 grundiert worden ist, wird eine Appretur aus 300 Teilen Wasser, 150 Teilen der vorstehend beschriebenen Dispersion und 7,2 Teilen der Initiatormischung aus Beispiel 1, gespritzt (15 g/DIN A 4; bei 80°C trocknen).
Das Leder wird zweimal mit 10 m/min unter einer Hochdruckquecksilberlampe (120 W/cm) durchbewegt.

Knickelastizität nach IUP 20:
- trockenes Leder: : starke Beschädigung nach 50 000 Vorgängen
- nasses Leder: : starke Beschädigung nach 20 000 Vorgängen
Reibechtheit nass nach IUP 450:
geringe Beschädigung nach 300 Vorgängen.

### Beispiel 2

591 Teile eines Polyesters aus Adipinsäure, Neopentylglykol und Hexandiol (OHZ = 56), 18,7 Teile Butandiolmonoacrylat, 8,7 Teile Trimethylolpropan, 27 Teile Butandiol-1,4 und 0,1 Teil p-Methoxy-Phenol werden bei 70°C im Vakuum entwässert und anschließend mit 236 Teilen eines äquimolaren Gemisches aus 1-Isocyanato-3,3,5-trimethyl-5-isocyanatomethylcyclohexan (IPDI) und 4,4'-Diisocyanatocyclohexylmethan (HMDI) bei 70°C bis zu einem NCO-Gehalt von 0,96 % umgesetzt. Nach Verdünnen mit 800 Teilen Aceton werden 48 Teile einer 40 %igen Lösung des Na-Salzes der N-(2-Aminoethyl)-2-aminoethancarbonsäure zugesetzt und anschließend bei 50°C mit 960 Teilen Wasser binnen 20 Minuten dispergiert. Danach wird ein Gemisch aus 5,8 Teilen Diethylentriamin, 2,7 Teilen 1-Amino-3,3,5-trimethyl-5-amino-methylcyclohexan und 365 Teilen Wasser zugefügt.

Nach Destillation des Acetons erhält man eine feinteilige Dispersion mit 40 % Feststoffgehalt; das Polyurethan ist in Dimethylformamid unlöslich.

Auf Rindboxleder, das wie in Beispiel 1 grundiert worden ist, wird eine Vorappretur aus 300 Teilen Wasser, 150 Teilen der oben beschriebenen erfindungsgemäßen Dispersion und 7,2 Teilen der Initiatormischung aus Beispiel 1 gespritzt (15 g/DIN A4; bei 80°C trocknen).

Hierauf wird eine Appretur wie in Beispiel 1 gespritzt und wie dort beschrieben bestrahlt.

Knickelastitität nach IUP 20:
- trockenes Leder: : keine Beschädigung nach 50 000 Vorgängen
- nasses Leder: : geringe Beschädigung nach 20 000 Vorgängen
Reibechtheit nass nach IUP 450:
geringe Beschädigung nach 150 Vorgängen.

### Vergleichsversuch 2

Es wird verfahren wie in Beispiel 2, jedoch enthält die Appretur die Dispersion aus Vergleichsversuch 1.

Knickelastizität nach IUP 20:
- trockenes Leder: : geringe Beschädigung nach 50 000 Vorgängen
- nasses Leder: : starke Beschädigung nach 20 000 Vorgängen
Reibechtheit nass nach IUP 450:
geringe Beschädigung nach 150 Vorgängen.

## Patentansprüche (Patentansprüche für folgende(n) Vertragsstaat(en): AT, BE, DE, FR, GB, IT, NL)

1. Wäßrige Dispersionen von durch Einwirkung von energiereicher Strahlung vernetzbaren Polyurethanen aus
a) 1 Grammäquivalent NCO eines Polyisocyanates,
b) 0,1 - 0,8 Grammäquivalenten OH eines Polyols mit einem Molekulargewicht zwischen 400 und 6 000 g/mol,
c) 0 - 0,8 Grammäquivalenten OH eines Polyols mit einem Molekulargewicht zwischen 62 und 399 g/mol,
d) 0 - 0,4 Grammäquivalenten NH eines Polyamins ohne tertiäre Aminogruppen mit mindestens zwei gegenüber Isocyanat reaktiven Aminogruppen, ausgenommen solche der Komponente f),
e) 0 - 0,4 Grammäquivalenten OH eines Aminoalkohols, ausgewählt aus Ethanolamin, Isopropanolamin, Methylethanolamin und Aminoethoxyethanol,
f) 0,05 - 0,5 Grammäquivalenten OH oder NH einer Verbindung mit Ionengruppen oder in Ionengruppen überführbaren Gruppen mit zusätzlich mindestens zwei gegenüber Isocyanat reaktiven Gruppen, ausgewählt aus Hydroxyl- und Aminogruppen,
g) 0 - 0,2 Grammäquivalent OH eines monofunktionellen Polyetherols sowie
h) einer Verbindung mit mindestens einer ethylenisch ungesättigten Gruppe und mindestens einer Hydroxylgruppe,
mit den Maßgaben, daß (i) die Summe der OH- und NH-Grammäquivalente zwischen 0,9 und 1,2 liegt und (ii) die Komponenten unter a) bis h) in Form von Einzelindividuen oder Gemischen aus zwei oder mehr Einzelindividuen vorliegen können, dadurch gekennzeichnet, daß die Verbindung mit einer ethylenisch ungesättigten Gruppe h) in Mengen von 0,02 bis 0,08 Grammäquivalent OH eingesetzt wird und daß das Polyurethan, gelöst in Dimethylformamid, einen K-Wert nach Fikentscher größer als 40 aufweist oder in Dimethylformamid nicht löslich ist.

2. Verwendung von wäßrigen Dispersionen gemäß Anspruch 1 zur Herstellung von Beschichtungen, die durch Bestrahlen mit energiereicher Strahlung vernetzt werden.

3. Verwendung von wäßrigen Dispersionen gemäß Anspruch 1 zur Herstellung von Beschichtungen auf flexiblen Substraten, die durch Bestrahlen mit energiereicher Strahlung vernetzt werden.

4. Verwendung von wäßrigen Dispersionen gemäß Anspruch 1 zur Herstellung von Beschichtungen auf Leder, die durch Bestrahlen mit energiereicher Strahlung vernetzt werden.

## Patentansprüche (Patentansprüche für folgende(n) Vertragsstaat(en): ES)

1. Verfahren zur Herstellung von durch Einwirkung von energiereicher Strahlung vernetzbaren Polyurethanen, dadurch gekennzeichnet, daß man ein Gemisch aus
a) 1 Grammäquivalenten NCO eines Polyisocyanates,
b) 0,1 - 0,8 Grammäquivalenten OH eines Polyols mit einem Molekulargewicht zwischen 400 und 6 000 g/mol,
c) 0 - 0,8 Grammäquivalenten OH eines Polyols mit einem Molekulargewicht zwischen 62 und 399 g/mol,
d) 0 - 0,4 Grammäquivalenten NH eines Polyamins ohne tertiäre Aminogruppen mit mindestens zwei gegenüber Isocyanat reaktiven Aminogruppen, ausgenommen solche der Komponente f),
e) 0 - 0,4 Grammäquivalenten OH eines Aminoalkohols, ausgewählt aus Ethanolamin, Isopropanolamin, Methylethanolamin und Aminoethoxyethanol,
f) 0,05 - 0,5 Grammäquivalenten OH oder NH einer Verbindung mit Ionengruppen oder in Ionengruppen überführbaren Gruppen mit zusätzlich mindestens zwei gegenüber Isocyanat reaktiven Gruppen, ausgewählt aus Hydroxyl- und Aminogruppen,
g) 0 - 0,2 Grammäquivalent OH eines monofunktionellen Polyetherols sowie
h) einer Verbindung mit mindestens einer ethylenisch ungesättigten Gruppe und mindestens einer Hydroxylgruppe,
mit der Maßgabe, daß (i) die Summe der OH- und NH-Grammäquivalente zwischen 0,9 und 1,2 liegt, (ii) die Komponenten unter a) bis h) in Form von Einzelindividuen oder Gemischen aus zwei oder mehr Einzelindividuen vorliegen können und (iii) die Verbindung mit einer ethylenisch ungesättigten Gruppe h) in Mengen von 0,02 bis 0,08 Grammäquivalent OH eingesetzt wird, in an sich bekannter Weise polyaddiert und anschließend mit Wasser dispergiert.

2. Verwendung der nach einem Verfahren gemäß Anspruch 1 erhaltenen Verfahrensprodukte zur Herstellung von Beschichtungen, die durch Bestrahlen mit energiereicher Strahlung vernetzt werden.

3. Verwendung der nach einem Verfahren gemäß Anspruch 1 erhaltenen Verfahrensprodukte zur Herstellung von Beschichtungen auf flexiblen Substraten, die durch Bestrahlen mit energiereicher Strahlung vernetzt werden.

4. Verwendung der nach einem Verfahren gemäß Anspruch 1 erhaltenen Verfahrensprodukte zur Herstellung von Beschichtungen auf Leder, die durch Bestrahlen mit energiereicher Strahlung vernetzt werden.

## Claims (Claims for the following Contracting State(s): AT, BE, DE, FR, GB, IT, NL)

1. An aqueous dispersion of a polyurethane which is crosslinkable by the action of high energy radiation and contains
a) 1 gram equivalent of NCO of a polyisocyanate,
b) 0.1-0.8 gram equivalent of OH of a polyol having a molecular weight of from 400 to 6,000 g/mol,
c) 0-0.8 gram equivalent of OH of a polyol having a molecular weight of from 62 to 399 g/mol,
d) 0-0.4 gram equivalent of NH of a polyamine without tertiary amino groups and having two or more amino groups which are reactive to isocyanate, except for those of component f),
e) 0-0.4 gram equivalent of OH of an amino alcohol selected from ethanolamine, isopropanolamine, methylethanolamine and aminoethoxyethanol,
f) 0.05-0.5 gram equivalent of OH or NH of a compound having ionic groups or groups which can be converted into ionic groups and additionally having two or more groups, selected from hydroxyl or amino groups, which are reactive to isocyanate,
g) 0-0.2 gram equivalent of OH of a monofunctional polyetherol and
h) a compound having one or more ethylenically unsaturated groups and one or more hydroxyl groups,
with the provisos that (i) the sum of the number of OH and NH gram equivalents is from 0.9 to 1.2 and (ii) the components under a) to h) may be present in the form of individual compounds or mixtures of two or more individual compounds, wherein the compound having an ethylenically unsaturated group h) is used in amounts corresponding to 0.02-0.08 gram equivalent of OH, and the polyurethane, dissolved in dimethylformamide, has a Fikentscher K value greater than 40 or is insoluble in dimethylformamide.

2. Use of an aqueous dispersion as claimed in claim 1 for the production of coatings which are crosslinked by exposure to high energy radiation.

3. Use of an aqueous dispersion as claimed in claim 1 for the production of coatings on flexible substrates, which are crosslinked by exposure to high energy radiation.

4. Use of an aqueous dispersion as claimed in claim 1 for the production of coatings on leather, which are crosslinked by exposure to high energy radiation.

## Claims (Claims for the following Contracting State(s): ES)

1. A process for the preparation of a polyurethane which is crosslinkable by the action of high energy radiation, wherein a mixture containing
a) 1 gram equivalent of NCO of a polyisocyanate,
b) 0.1-0.8 gram equivalent of OH of a polyol having a molecular weight of from 400 to 6,000 g/mol,
c) 0-0.8 gram equivalent of OH of a polyol having a molecular weight of from 62 to 399 g/mol,
d) 0-0.4 gram equivalent of NH of a polyamine without tertiary amino groups and having two or more amino groups which are reactive to isocyanate, except for those of component f),
e) 0-0.4 gram equivalent of OH of an amino alcohol selected from ethanolamine, isopropanolamine, methylethanolamine and aminoethoxyethanol,
f) 0.05-0.5 gram equivalent of OH or NH of a compound having ionic groups or groups which can be converted into ionic groups and additionally having two or more groups, selected from hydroxyl or amino groups, which are reactive to isocyanate,
g) 0-0.2 gram equivalent of OH of a monofunctional polyetherol and
h) a compound having one or more ethylenically unsaturated groups and one or more hydroxyl groups,
with the proviso that (i) the sum of the number of OH and NH gram equivalents is from 0.9 to 1.2, (ii) the components under a) to h) may be present in the form of individual compounds or mixtures of two or more individual compounds and (iii) the compound having an ethylenically unsaturated group h) is used in amounts corresponding to 0.02-0.08 gram equivalent of OH, is subjected to a conventional polyaddition reaction and then dispersed with water.

2. Use of a product, obtained by a process as claimed in claim 1, for the production of coatings which are crosslinked by exposure to high energy radiation.

3. Use of a product, obtained by a process as claimed in claim 1, for the production of coatings on flexible substrates, which are crosslinked by exposure to high energy radiation.

4. Use of a product, obtained by a process as claimed in claim 1, for the production of coatings on leather, which are crosslinked by exposure to high energy radiation.

## Revendications (Revendications pour l'(les) Etat(s) contractant(s) suivant(s): AT, BE, DE, FR, GB, IT, NL)

1. Dispersions aqueuse de polyuréthannes réticulables par l'action d'un rayonnement riche en énergie, caractérisé en ce que l'on procède à la polyaddition d'un mélange constitué de
a) un équivalent-gramme de NCO d'un polyisocyanate,
b) 0,1 à 0,8 équivalent-gramme d'OH d'un polyol possédant un poids moléculaire compris entre 400 et 6.000 g/mole,
c) 0 à 0,8 équivalent-gramme d'OH d'un polyol possédant un poids moléculaire compris entre 52 et 399 g/mole,
d) 0 à 0,4 équivalent-gramme de NH d'une polyamine sans radicaux amino tertiaires avec au moins deux radicaux amino réagissant sur l'isocyanate, à l'exception de ceux du composant f),
e) 0 à 0,4 équivalent-gramme d'OH d'un aminoalcool choisi parmi l'éthanolamine, l'isopropanolamine, la méthyléthanolamine et l'aminoéthoxyéthanol,
f) 0,05 à 0,5 équivalent-gramme d'OH ou de NH d'un composé avec des radicaux ioniques, ou des radicaux transformables en radicaux ioniques, avec complémentairement au moins deux radicaux réagissant sur l'isocyanate, choisis parmi les radicaux hydroxyle et amino,
g) 0 à 0,2 équivalent-gramme d'OH d'un polyéthérol, ainsi que de
h) un composé avec au moins un radical éthyléniquement insaturé et au moins un radical hydroxyle,
avec la condition que (i) la somme des équivalentsgrammes d'OH et de NH se situe entre 0,9 et 1,2, (ii) les composés repris sous a) à h) peuvent se présenter sous forme de composés individuels, ou sous forme de mélanges de deux ou de plus de deux composés individuels, caractérisées en ce que le composé avec un radical éthyléniquement insaturés h) est mis en oeuvre en proportions de 0,02 à 0,08 équivalent-gramme d'OH et en ce que le polyuréthanne, dissous dans du diméthylformamide, présente une valeur K selon Fikentscher supérieure à 40, ou n'est pas soluble dans le diméthylformamide.

2. Utilisation de dispersions aqueuses selon la revendication 1 pour la préparation de revêtements que l'on fait réticuler par irradiation à l'aide d'un rayonnement riche en énergie.

3. Utilisation de dispersions aqueuses suivant la revendication 1 pour la préparation de revêtements sur des supports ou subjectiles flexibles ou souples, que l'on fait réticuler par irradiation à l'aide d'un rayonnement riche en énergie.

4. Utilisation de dispersions aqueuses suivant la revendication 1 pour la préparation de revêtements sur le cuir, que l'on fait réticuler par irradiation à l'aide d'un rayonnement riche en énergie.

## Revendications (Revendications pour l'(les) Etat(s) contractant(s) suivant(s): ES)

1. Procédé de préparation de polyuréthannes réticulables par l'action d'un rayonnement riche en énergie, caractérisé en ce que l'on procède à la polyaddition d'un mélange constitué de
a) un équivalent-gramme de NCO d'un polyisocyanate,
b) 0,1 à 0,8 équivalent-gramme d'OH d'un polyol possédant un poids moléculaire compris entre 400 et 6.000 g/mole,
c) 0 à 0,8 équivalent-gramme d'OH d'un polyol possédant un poids moléculaire compris entre 52 et 399 g/mole,
d) 0 à 0,4 équivalent-gramme de NH d'une polyamine sans radicaux amino tertiaires avec au moins deux radicaux amino réagissant sur l'isocyanate, à l'exception de ceux du composant f),
e) 0 à 0,4 équivalent-gramme d'OH d'un aminoalcool choisi parmi l'éthanolamine, l'isopropanolamine, la méthyléthanolamine et l'aminoéthoxyéthanol,
f) 0,05 à 0,5 équivalent-gramme d'OH ou de NH d'un composé avec des radicaux ioniques, ou des radicaux transformables en radicaux ioniques, avec complémentairement au moins deux radicaux réagissant sur l'isocyanate, choisis parmi les radicaux hydroxyle et amino,
g) 0 à 0,2 équivalent-gramme d'OH d'un polyéthérol, ainsi que de
h) un composé avec au moins un radical éthyléniquement insaturé et au moins un radical hydroxyle,
avec la condition que (i) la somme des équivalentsgrammes d'OH et de NH se situe entre 0,9 et 1,2, (ii) les composés repris sous a) à h) peuvent se présenter sous forme de composés individuels, ou sous forme de mélanges de deux ou de plus de deux composés individuels et (iii) le composé avec un radical éthyléniquement insaturé h) soit mis en oeuvre en proportions de 0,02 à 0,08 équivalent-gramme d'OH, la polyaddition s'effectuant de manière en soi connue et on disperse ensuite le produit obtenu dans de l'eau.

2. Utilisation d'un produit fabriqué obtenu par mise en oeuvre du procédé conforme à la revendication 1 pour la préparation de revêtements que l'on fait réticuler par irradiation à l'aide d'un rayonnement riche en énergie.

3. Utilisation de produits fabriqués obtenus par mise en oeuvre du procédé suivant la revendication 1 pour la préparation de revêtements sur des supports ou subjectiles flexibles ou souples, que l'on fait réticuler par irradiation à l'aide d'un rayonnement riche en énergie.

4. Utilisation des produits fabriqués obtenus par mise en oeuvre du procédé suivant la revendication 1 pour la préparation de revêtement sur le cuir, que l'on fait réticuler par irradiation à l'aide d'un rayonnement riche en énergie.
